# EUROPEAN PATENT SPECIFICATION

(11) **EP 3 739 206 B1**
(45) Date of publication and mention of the grant of the patent: **31.05.2023**
(21) Application number: 19174862.3
(22) Date of filing: 16.05.2019
(51) Int. Cl.: F03D 80/70, F16C 17/06, F16C 17/26, F16C 17/04, F16C 33/10, F16C 17/03

(54) **BEARING ARRANGEMENT FOR A WIND TURBINE AND WIND TURBINE**
LAGERANORDNUNG FÜR EINE WINDTURBINE SOWIE WINDTURBINE
AGENCEMENT DE PALIER D'UNE ÉOLIENNE ET ÉOLIENNE

(43) Date of publication of application: 18.11.2020
(73) Proprietor: Siemens Gamesa Renewable Energy A/S, 7330 Brande (DK)
(72) Inventor: Bak, Frank, 8210 Aarhus V (DK); Kanstrup, Troels, 8763 Rask Moelle (DK); Lemma, Edom, 7100 Jerlev, Vejle (DK); Michaelsen, Claus, 7400 Herning (DK); Soerensen, Morten, 8700 Horsens (DK); Thomsen, Kim, 9520 Skørping (DK)
(74) Representative: SGRE-Association

(56) References cited:
- EP-A1- 2 568 167
- US-A1- 2015 125 104
- US-A1- 2017 260 970

## Description

The invention relates to a bearing arrangement for a wind turbine and a wind turbine.

In general, bearing arrangements of wind turbines comprise a bearing housing and a drive shaft, whereby the drive shaft is arranged within the bearing housing in an axial direction along a longitudinal axis of the bearing housing. Bearings of the bearing arrangement are arranged about the drive shaft, so that the drive shaft can be rotated within the bearing housing by means of a rotor of the wind turbine. Such a bearing arrangement is known from EP 3 276 192 A1, for example. US 2017/260970 A1 discloses a bearing arrangement according to the preamble of claim 1.

The bearing arrangement must be provided with axial load taking capabilities to be able to take an axial load from an axial or thrust force of the drive shaft. Such axial load taking capabilities may be provided by an axial bearing, which may be structurally integrated with the bearing arrangement. However, current solutions, e.g. a bolt connection between the axial collar of an axial bearing and the drive shaft, have a leakage potential, are cumbersome in their manufacture and difficult to service.

It is an object of the invention to eliminate or at least reduce disadvantages in the prior art techniques related to the structural integration of an axial bearing in the bearing arrangement, in particular to provide a bearing arrangement for a wind turbine with an axial bearing having no or little leakage potential, which is simple to manufacture and requires no or little maintenance.

This object is solved by the subject-matter of the claims. In particular, the object is solved by a bearing arrangement of a wind turbine according to claim 1 and a wind turbine according to claim 14. Further details of the invention unfold from the other claims as well as the description and the drawings. Thereby, the features and details described in connection with the bearing arrangement of the invention apply in connection with the wind turbine of the invention, so that regarding the disclosure of the individual aspects of the invention it is or can be referred to one another.

According to a first aspect of the invention, the invention relates to a bearing arrangement for a wind turbine comprising a bearing housing and a drive shaft, whereby the drive shaft is arranged within the bearing housing in an axial direction along a longitudinal axis of the bearing housing, the bearing arrangement further comprising a downwind bearing and an upwind bearing as radial fluid bearings, whereby the downwind bearing and the upwind bearing are arranged between the bearing housing and the drive shaft, the bearing arrangement further comprising an axial bearing, whereby the axial bearing comprises an axial bearing stop for limiting a movement of the drive shaft in an axial direction along the longitudinal axis, whereby the axial bearing stop is integrally formed with the bearing housing as a protrusion extending from the bearing housing in a radial direction of the bearing housing, and the axial bearing comprises an axial collar arranged opposite of the axial bearing stop and extending outwards of the drive shaft.

By means of the invention, there are no weak points, such as bolt connections, between the axial collar and the bearing housing which would have a potential of leaking lubricant from the axial bearing or which would require maintenance. Further, the bearing arrangement of the invention is simple to manufacture in that it requires few manufacturing steps.

Preferably, the axial bearing stop is monolithically designed with the drive shaft. Thereby, a particularly simple manufacturing method of the axial bearing stop is provided and structural integrity of the axial bearing stop and the bearing housing is further improved.

Preferably, multiple axial bearing pads are, in particular reversibly, attached to the axial bearing stop. Thereby, an effective path of the axial bearing can be formed between the multiple axial bearing pads and a counter-part of the multiple axial bearing pads. The axial bearing pads may comprise an elastomer for contacting the counter-part of the axial bearing pads of the axial bearing, for example. The axial bearing pads may be serviced or replaced when they are worn off or fail due to the load applied onto them during axial loading.

Further preferably, the multiple axial bearing pads are attached to the axial bearing stop by means of multiple attachment openings arranged in the axial bearing stop. Inserted into the multiple attachment openings may be axial bearing bodies and/or axial tiltable support structures, to which the axial bearing pads are attached. The axial bearing bodies, axial tiltable support structures or axial bearing pads may be secured to the axial bearing stop by connection means, such as bolts, for example. Axial bearing pads attached via axial tiltable support structures to the axial bearing stop allow for the axial bearing pads to be tiltable with respect to a counter-part of the axial bearing pads such as an axial collar. Thereby, tolerances between counter-part and the axial bearing pads can be compensated for.

Moreover preferably, the axial bearing stop is arranged about an entire circumference of the bearing housing. Thereby, a large mass on the axial bearing stop for taking axial loads is provided and the overall load distribution on the axial bearing stop is improved.

It is further preferred, that the axial bearing stop is arranged inwards of the bearing housing. In particular, the axial bearing stop extends radially inwards towards the drive shaft. In other words, the axial bearing stop extends radially inwards relative to a cylindrical surface of the bearing housing. Thereby, the axial bearing stop is favorably located on an inside of the bearing housing, which allows for a simple design of the axial bearing.

Preferably, the axial bearing is arranged at a downwind portion or an upwind portion of the drive shaft. The downwind portion may be a portion extending from a downwind end of the drive shaft in an axial direction along the longitudinal axis to an upwind end of the drive shaft and having a length of 10% of an entire length of the drive shaft. The upwind portion may be a portion extending from an upwind end of the drive shaft in an axial direction along the longitudinal axis to a downwind end of the drive shaft and having a length of 10% of an entire length of the drive shaft. In particular, the axial bearing may be arranged at the downwind end or the upwind end of the drive shaft.

Preferably, the axial bearing stop is arranged at a downwind end of the bearing housing. Thereby, the axial bearing stop may take the axial loads along the entire bearing housing.

Preferably, the downwind bearing or the upwind bearing of the bearing arrangement is located adjacent to the axial bearing. Thereby, the manufacturing of the bearings may be further facilitated.

Preferably, the downwind bearing or the upwind bearing is fluidically connected to the axial bearing. In other words, a lubricant, e.g. oil, provided in the downwind bearing or the upwind bearing can flow to the axial bearing. Thereby, a radial bearing and an axial bearing can be combined so as to reduce the maintenance requirements with regard to providing the lubricant in the bearings.

Preferably, the downwind bearing or the upwind bearing is fluidically connected to the axial bearing. In other words, a lubricant, e.g. oil, provided in the downwind bearing or the upwind bearing can flow to the axial bearing. Thereby, a radial bearing and an axial bearing can be combined so as to reduce the maintenance requirements with regard to providing the lubricant in the bearings.

The axial collar is a reliable counter-part for the axial bearing stop in the axial bearing, when the drive shaft is axially moved in an axial direction along the longitudinal axis.

Further preferably, the axial collar is arranged at the drive shaft. Thereby, the design of the axial bearing can be kept compact and without any additional parts.

Moreover preferably, the axial collar is arranged about an entire circumference of the drive shaft. Thereby, a large surface on the axial collar for taking axial loads is provided and the overall load distribution on the axial collar is improved. That the axial collar extends outwards of the drive shaft means in other words that the axial collar extends radially outwards relative to a cylindrical surface of the drive shaft. Thereby, the axial collar is favorably located on an outside of the drive shaft, which allows for a simple design of the axial bearing.

Furthermore preferably, the axial collar is integrally formed with the drive shaft. Thereby, there are no weak points between the axial collar and the drive shaft, such as bolt connections, which would have a potential of leaking lubricant from the axial bearing or which would require maintenance. Further, the manufacture of such an integral design requires few manufacturing steps.

In particular, the axial collar may be monolithically designed with the drive shaft. Thereby, a particularly simple manufacturing method of the axial collar is provided and structural integrity is further improved.

According to a second aspect of the invention, the invention relates to a wind turbine comprising a bearing arrangement according to the invention, whereby the wind turbine further comprises a rotor connected to drive the drive shaft and a generator connected to be driven by the drive shaft.

The generator may be a direct drive generator or a geared generator having a gearbox, for example. The rotor is also commonly referred to as a hub of the wind turbine. Two, three or more wind turbine blades may be attached to the rotor or hub. The wind turbine may further comprise a nacelle, which may be supported on a tower of the wind turbine. The nacelle may comprise the bearing arrangement. The bearing arrangement, in particular the bearing housing, and the generator may be attached to the nacelle and/or the tower.

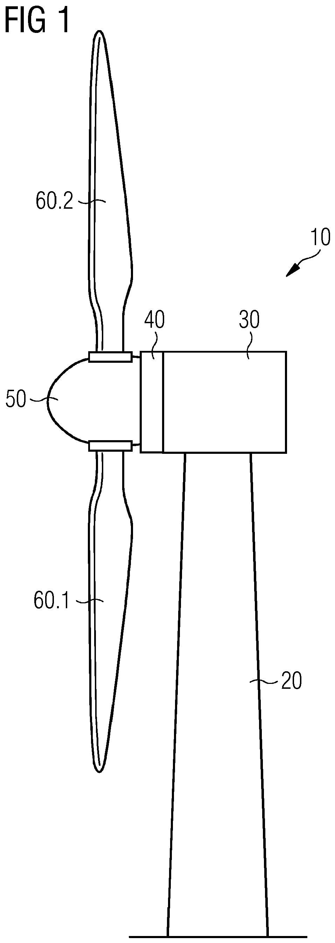

Further advantages, features and details of the invention unfold from the following description, in which by reference to drawings FIG. 1 to 7 embodiments and/or features of the present invention are described in detail. Thereby, the features from the claims as well as the features mentioned in the description can be essential for the invention as taken alone or in an arbitrary combination. In the drawings, there is schematically shown:
- FIG. 1: a side view on a wind turbine,
- FIG. 2: a side perspective view on a sectional cut along the longitudinal axis of a bearing arrangement of the wind turbine of FIG. 1,
- FIG. 3: a side view on a sectional cut along the bearing arrangement of the wind turbine of FIG. 1,
- FIG. 4: shows a view on a detail of the bearing arrangement of FIG. 3,
- FIG. 5: shows a view on a further detail of the bearing arrangement of FIG. 3,
- FIG. 6: shows a side perspective view on another bearing arrangement of the wind turbine of FIG. 1, and
- FIG. 7: shows a view on a detail of the bearing arrangement of FIG. 6.

Same objects in FIG. 1 to 7 are denominated with the same reference number. If there is more than one object of the same kind in one of the figures, the objects are numbered in ascending order with the ascending number of the object being separated from its reference number by a dot. The specific dimensions of features and parts in the figures are exemplary and may be enlarged for ease of reference only.

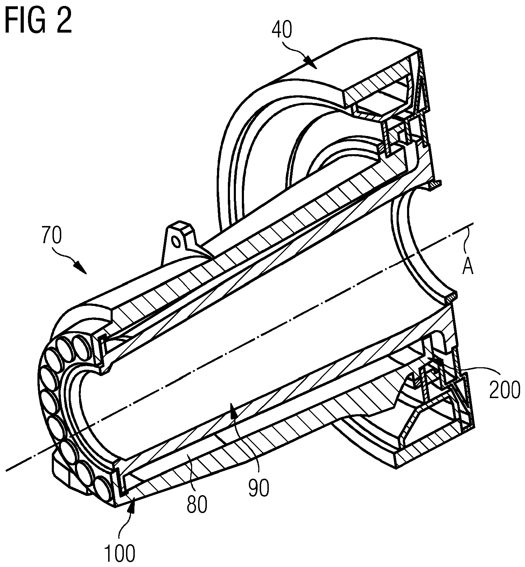

FIG. 1 shows a side view on a wind turbine 10. The wind turbine 10 comprises a supporting tower 20 and a nacelle 30, whereby the nacelle 30 is attached to the supporting tower 20. The nacelle 30 comprises a bearing arrangement 70, which is not shown in FIG. 1 but can be seen in FIG. 2. The wind turbine 10 further comprises a generator 40 attached to a rotor 50 of the wind turbine 10. Two wind turbine blades 60.1, 60.2 are attached to the rotor 50.

FIG. 2 shows a side perspective view on a sectional cut along the longitudinal axis A of the bearing arrangement 70 of the wind turbine 10 of FIG. 1. The bearing arrangement 70 comprises a bearing housing 80 and a drive shaft 90, whereby the drive shaft 90 is arranged within the bearing housing 80 in an axial direction along the longitudinal axis A of the bearing housing 80 as indicated in FIG. 2. The longitudinal axis A of the bearing housing 80 corresponds to the longitudinal axis A of the drive shaft 90 and thereby is a longitudinal axis A of the bearing arrangement 70. The bearing arrangement 90 further comprises a downwind bearing 100 and an upwind bearing 200 as radial fluid bearings, whereby the downwind bearing 100 and the upwind bearing 200 are arranged between the bearing housing 80 and the drive shaft 90. In particular, the downwind bearing 100 is arranged about a downwind portion of the drive shaft 90 and the upwind bearing 200 is arranged about an upwind portion of the drive shaft 90. The drive shaft 90 is operatively connected to the generator 40. The generator 40 is shown as a direct drive generator. However, it is also possible to provide the generator 40 as a geared generator, for example.

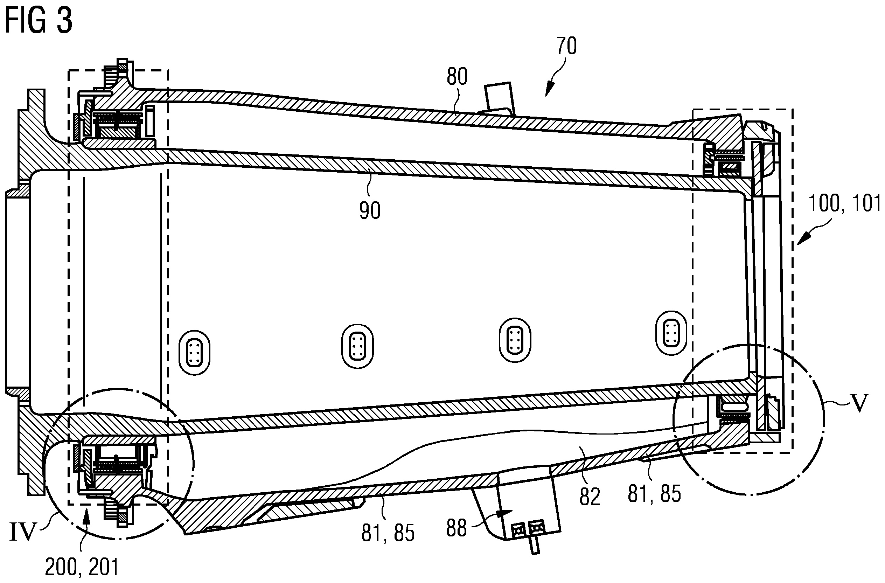

FIG. 3 shows a side view on a sectional cut along the longitudinal axis A of the bearing arrangement 70 of FIG. 2. An internal space 82 of the bearing housing 80 is formed between the bearing housing 80 and the drive shaft 90.

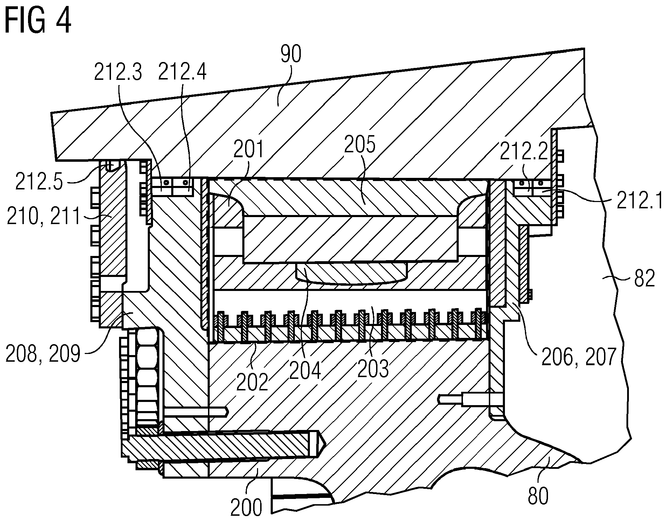

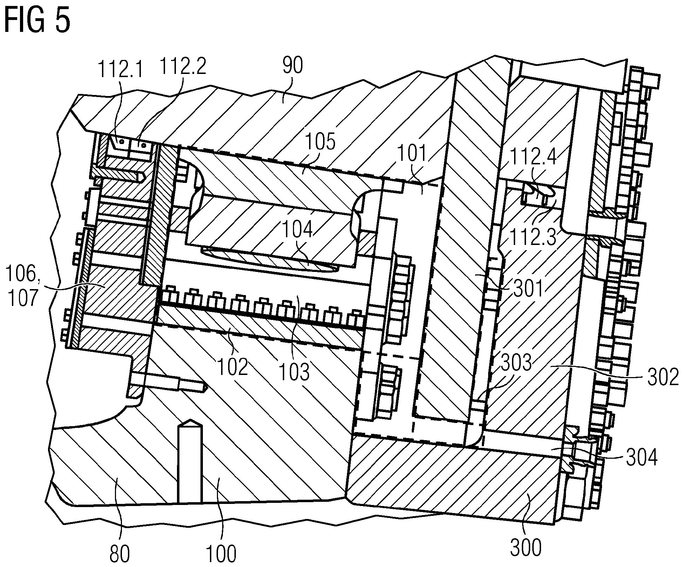

Lubricant may leak from the downwind bearing 100 and the upwind bearing 200 into the internal space 82 and thereby be collected in the bearing housing 80, which is formed as a funnel 85 in a bottom part of the bearing housing 80. A lubricant pump 88 is fluidically connected to a drain outlet (not shown) of the bearing housing 80. Moreover, the downwind bearing 100 comprising a lubricant flooded chamber 101 and the upwind bearing 200 comprising a lubricant flooded chamber 201 are shown, the principle and features of which will further be explained with reference to FIG. 4 and FIG. 5.

FIG. 4 shows an enlarged view on the sectional cut through the upwind bearing 200 and its lubricant flooded chamber 201 according to the detail IV of FIG. 3. A radial bearing body 203 is attached to the bearing housing 80. Specifically, the radial bearing body 203 is attached to a cylindrical seat 202 formed in the bearing housing 80. A radial tiltable support structure 204 is secured to the radial bearing body 203. A radial bearing pad 205 is attached to the radial tiltable support structure 204. The radial bearing pad 205 is arranged in sliding contact with the drive shaft 90. The radial tiltable support structure 204 allows for a tilting movement of the radial bearing pad 205. Multiple of such radial bearing units comprising a radial bearing body 203, a radial tiltable support structure 204 and a radial bearing pad 205 are arranged in series along the cylindrical seat 202 in the lubricant flooded chamber 201, in particular along a circumference of the cylindrical seat 202 of the upwind bearing 200.

The lubricant flooded chamber 201 of the upwind bearing 200 is sealed by means of an inner sealing 206 against the internal space 82 of the bearing housing 80. The inner sealing 206 of the lubricant flooded chamber 201 of the upwind bearing 200 comprises multiple inner sealing plates 207. Two lip seals 212.1, 212.2 are arranged in series between the inner sealing 206 and the drive shaft 90 so as to seal the sealing 206 against the drive shaft 90.

The lubricant flooded chamber 201 of the upwind bearing 200 is sealed against an outside of the bearing housing 80 by means of an outer sealing 208 and a dust sealing 210. The outer sealing 208 comprises an outer seal plate 209 and two lip seals 212.3, 212.4 arranged in series in between the outer seal plate 209 and the drive shaft 90. The dust sealing 210 is formed by a dust seal plate 211 and a further lip seal 212.5 arranged between the dust seal plate and the drive shaft 90. The dust sealing 210 is located towards the outside of the bearing housing 80. The dust sealing 210 sandwiches the outer sealing 208 in between the dust sealing 210 and the outer sealing 206.

FIG. 5 shows an enlarged view on the sectional cut through the downwind bearing 100 and its lubricant flooded chamber 101 according to the detail V of FIG. 3. A radial bearing body 103 is attached to a bearing housing 80. Specifically, the radial bearing body 103 is attached to a cylindrical seat 102 formed in the bearing housing 80. A radial tiltable support structure 104 is secured to the radial bearing body 103. A radial bearing pad 105 is attached to the radial tiltable support structure 104. The radial bearing pad 105 is arranged in sliding contact with the drive shaft 90. The radial tiltable support structure 104 allows for a tilting movement of the radial bearing pad 105. Multiple of such radial bearing units comprising a radial bearing body 103, a radial tiltable support structure 104 and a radial bearing pad 105 are arranged in a series along the cylindrical seat 102 in the lubricant flooded chamber 101, in particular along a circumference of the cylindrical seat 102 of the downwind bearing 100.

The lubricant flooded chamber 101 of the downwind bearing 100 is sealed by means of an inner sealing 106 against the internal space 82 of the bearing housing 80. The inner sealing 106 of the lubricant flooded chamber 101 of the downwind bearing 100 comprises multiple inner sealing plates 107. Two lip seals 112.1, 112.2 are arranged in series between the inner sealing 106 and the drive shaft 90 so as to seal the sealing 106 against the drive shaft 90.

The lubricant flooded chamber 101 is fluidically connected to an effective path provided by a lubricant flow channel 303 of an axial bearing 300 of the bearing arrangement 70. The axial bearing 300 comprises an axial collar 301 and multiple axial bearing pads (not shown here, because the sectional cut goes through the axial bearing stop 302, only) attached to an axial bearing stop 302. The axial collar 301 extends outwards from the drive shaft 90. The axial collar 301 extends along an entire circumference of the drive shaft 90. The lubricant flow channel 303 of the axial bearing 300 is formed between the axial collar 301 and the multiple axial bearing pads of the axial bearing stop 302. An overflow channel 304 of the axial bearing 300 is arranged in fluidical contact with the lubricant flooded chamber 101. By means of the overflow channel 304, excessive lubricant may be released out of the lubricant flooded chamber 101. The overflow channel 304 may be connected to the internal space 82 for releasing the lubricant into the bearing housing 80. The downwind bearing 100 has the axial bearing 300 as a sealing of the oil flooded chamber 101 against the outside of the bearing housing 80.

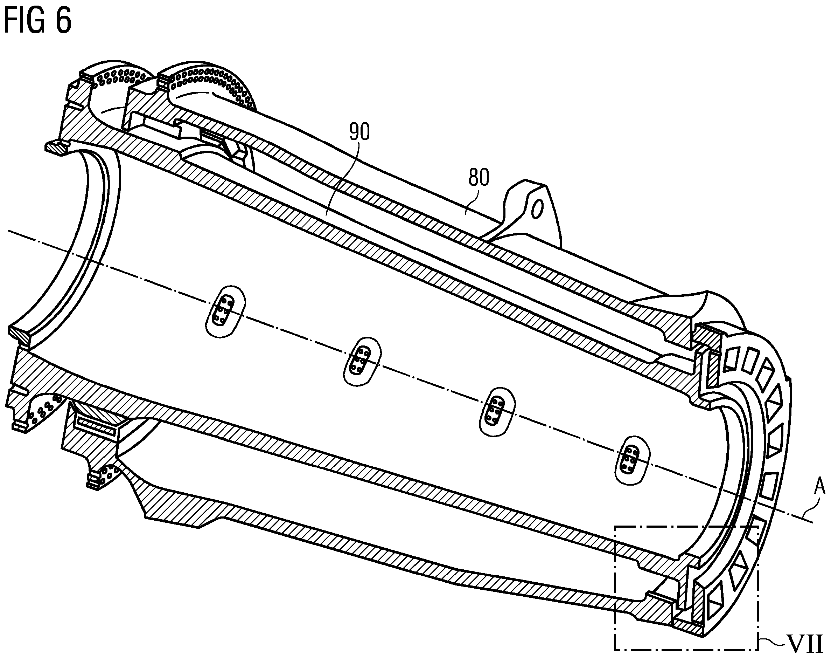

FIG. 6 shows a side perspective view on another bearing arrangement 70 of the wind turbine 10 of FIG. 1, in which the downwind bearing 100 and the upwind bearing 200 have been omitted for presentation purposes only. The drive shaft 90 has a cylindrical shape. Further, the bearing housing 80 has a cylindrical shape.

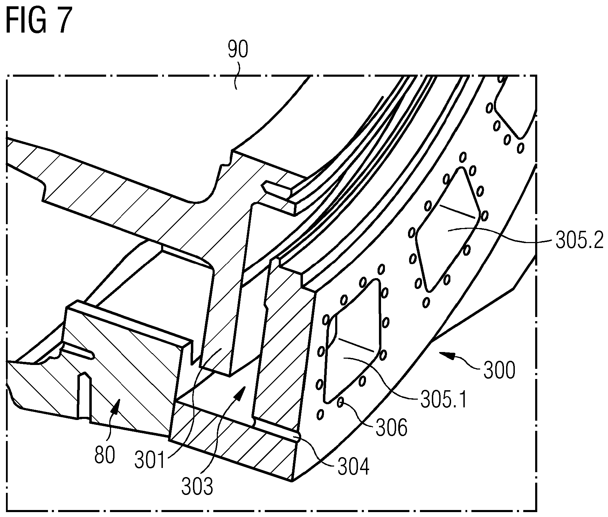

FIG. 7 shows a view on a detail VII of the bearing arrangement 70 of FIG. 6. As can be seen, the axial collar 301 of the axial bearing is integrally formed with the drive shaft 90. The axial collar 301 extends radially outwards from the drive shaft 90 and along an entire circumference of the drive shaft 90, whereby due to the sectional cut this can only have been seen partially.

The axial bearing stop 302 is integrally formed with the bearing housing 80. The axial bearing stop 302 extends as a protrusion of the bearing housing 80 inwards towards the drive shaft 90. The axial bearing stop 302 is at a right angle or an approximate right angle with the bearing housing 80. The axial bearing stop 302 comprises multiple axial bearing attachment openings 305.1, 305.2 along its circumference for attaching axial bearing pads thereto. In particular, the multiple axial bearing attachment openings 305.1, 305.2 may be designed so as to have axial bearing bodies and/or axial tiltable support structures, to which the axial bearing pads are attached, inserted therein. In this particular embodiment, the axial bearing attachment openings 305.1, 305.2 have a rectangular shape. The axial bearing bodies and/or the axial tiltable support structures may be secured to the axial bearing stop 302 by means of press-fitting into the axial bearing attachment openings 305.1, 305.2 and/or by means of axial bearing connection means 306. The axial bearing connection means 306 may be threaded holes of the axial bearing stop 302, as shown in FIG. 7. Multiple axial bearing connection means 306 may be arranged around the axial bearing attachment openings 305.1, 305.2, as shown in FIG. 7 in a rectangular shaped manner. Bolts may be inserted into the axial bearing connection means 306 and the axial bearing bodies and/or the axial tiltable support structures to secure the axial bearing pads thereto.

## Claims

1. Bearing arrangement (70) for a wind turbine (10) comprising a bearing housing (80) and a drive shaft (90), whereby the drive shaft (90) is arranged within the bearing housing (80) in an axial direction along a longitudinal axis (A) of the bearing housing (80), the bearing arrangement (70) further comprising a downwind bearing (100) and an upwind bearing (200) as radial fluid bearings, whereby the downwind bearing (100) and the upwind bearing (200) are arranged between the bearing housing (80) and the drive shaft (90), the bearing arrangement (70) further comprising an axial bearing (300), the axial bearing (300) comprises an axial bearing stop (302) for limiting a movement of the drive shaft (90) in the axial direction along the longitudinal axis (A), whereby the axial bearing stop (302) is integrally formed with the bearing housing (80) as a protrusion extending from the bearing housing (80) in a radial direction of the bearing housing (80), **characterised in that**
the axial bearing (300) comprises an axial collar (301) arranged opposite of the axial bearing stop (302) and extending outwards of the drive shaft (90).

2. Bearing arrangement (70) according to claim 1,
**characterized in that,**
the axial bearing stop (301) is monolithically designed with the drive shaft (90).

3. Bearing arrangement (70) according to claim 1 or 2,
**characterized in that,**
multiple axial bearing pads are, in particular reversibly, attached to the axial bearing stop (302).

4. Bearing arrangement (70) according to claim 3,
**characterized in that,**
the multiple axial bearing pads are attached to the axial bearing stop (302) by means of multiple attachment openings (305) arranged in the axial bearing stop (302).

5. Bearing arrangement (70) according to any of the previous claims,
**characterized in that,**
the axial bearing stop (302) is arranged about an entire circumference of the bearing housing (80).

6. Bearing arrangement (70) according to any of the previous claims,
**characterized in that,**
the axial bearing stop (302) is arranged inwards of the bearing housing (80).

7. Bearing arrangement (70) according to any of the previous claims,
**characterized in that,**
the axial bearing (300) is arranged at a downwind portion or an upwind portion of the drive shaft (90).

8. Bearing arrangement (70) according to any of the previous claims,
**characterized in that,**
the axial bearing stop (302) is arranged at a downwind end of the bearing housing (80).

9. Bearing arrangement (70) according to any of the previous claims,
**characterized in that,**
the downwind bearing (100) or the upwind bearing (200) of the bearing arrangement (70) is located adjacent to the axial bearing (300).

10. Bearing arrangement (70) according to claim 9,
**characterized in that,**
the downwind bearing (100) or the upwind bearing (200) and the axial bearing (300) are fluidically connected to one another.

11. Bearing arrangement (70) according to any of the previous claims,
**characterized in that,**
the axial collar (301) is arranged at the drive shaft (90).

12. Bearing arrangement (70) according to any of the previous claims,
**characterized in that,**
the axial collar (301) is arranged about an entire circumference of the drive shaft (90).

13. Bearing arrangement (70) according to any of claims 10 to 11,
**characterized in that,**
the axial collar (301) is integrally formed with the drive shaft (90).

14. Wind turbine (10) comprising a bearing arrangement (70) according to any of the previous claims, whereby the wind turbine (10) further comprises a rotor (50) operatively connected to drive the drive shaft (90) and a generator (40) operatively connected to be driven by the drive shaft (90).

## Patentansprüche

1. Lageranordnung (70) für eine Windkraftanlage (10), umfassend ein Lagergehäuse (80) und eine Antriebswelle (90), wobei die Antriebswelle (90) innerhalb des Lagergehäuses (80) in eine Axialrichtung entlang einer Längsachse (A) des Lagergehäuses (80) angeordnet ist, wobei die Lageranordnung (70) ferner ein Leelager (100) und ein Luvlager (200) als Radialfluidlager umfasst, wobei das Leelager (100) und das Luvlager (200) zwischen dem Lagergehäuse (80) und der Antriebswelle (90) angeordnet sind, wobei die Lageranordnung (70) ferner ein Axiallager (300) umfasst,
wobei das Axiallager (300) einen Axiallageranschlag (302) zum Begrenzen der Bewegung der Antriebswelle (90) in Axialrichtung entlang der Längsachse (A) umfasst, wobei der Axiallageranschlag (302) in das Lagergehäuse (80) als Vorsprung, der sich vom Lagergehäuse (80) in Radialrichtung des Lagergehäuses (80) erstreckt, integriert ausgebildet ist,
**dadurch gekennzeichnet, dass**
das Axiallager (300) eine Axialmanschette (301) umfasst, die dem Axiallageranschlag (302) entgegengesetzt angeordnet ist und sich von der Antriebswelle (90) nach außen erstreckt.

2. Lageranordnung (70) nach Anspruch 1, **dadurch gekennzeichnet, dass**
der Axiallageranschlag (301) mit der Antriebswelle (90) einstückig ausgestaltet ist.

3. Lageranordnung (70) nach Anspruch 1 oder 2,
**dadurch gekennzeichnet, dass**
mehrere Axiallagersegmente, insbesondere umkehrbar, an dem Axiallageranschlag (302) befestigt sind.

4. Lageranordnung (70) nach Anspruch 3,
**dadurch gekennzeichnet, dass**
die mehreren Axiallagersegmente mittels mehrerer Befestigungsöffnungen (305), die in dem Axiallageranschlag (302) angeordnet sind, am Axiallageranschlag (302) befestigt sind.

5. Lageranordnung (70) nach einem der vorstehenden Ansprüche,
**dadurch gekennzeichnet, dass**
der Axiallageranschlag (302) um den gesamten Umfang des Lagergehäuses (80) angeordnet ist.

6. Lageranordnung (70) nach einem der vorstehenden Ansprüche,
**dadurch gekennzeichnet, dass**
der Axiallageranschlag (302) vom Lagergehäuse (80) nach innen angeordnet ist.

7. Lageranordnung (70) nach einem der vorstehenden Ansprüche,
**dadurch gekennzeichnet, dass**
das Axiallager (300) an einem Leeabschnitt oder einem Luvabschnitt der Antriebswelle (90) angeordnet ist.

8. Lageranordnung (70) nach einem der vorstehenden Ansprüche,
**dadurch gekennzeichnet, dass**
der Axiallageranschlag (302) an einem Lee-Ende des Lagergehäuses (80) angeordnet ist.

9. Lageranordnung (70) nach einem der vorstehenden Ansprüche,
**dadurch gekennzeichnet, dass**
das Leelager (100) oder das Luvlager (200) der Lageranordnung (70) an das Axiallager (300) angrenzend fixiert ist.

10. Lageranordnung (70) nach Anspruch 9,
**dadurch gekennzeichnet, dass**
das Leelager (100) oder das Luvlager (200) und das Axiallager (300) fluidisch miteinander verbunden sind.

11. Lageranordnung (70) nach einem der vorstehenden Ansprüche, **dadurch gekennzeichnet, dass** die Axialmanschette (301) an der Antriebswelle (90) angeordnet ist.

12. Lageranordnung (70) nach einem der vorstehenden Ansprüche,
**dadurch gekennzeichnet, dass**
die Axialmanschette (301) um den gesamten Umfang der Antriebswelle (90) angeordnet ist.

13. Lageranordnung (70) nach einem der Ansprüche 10 bis 11,
**dadurch gekennzeichnet, dass**
die Axialmanschette (301) in die Antriebswelle (90) integriert ausgebildet ist.

14. Windkraftanlage (10), umfassend eine Lageranordnung (70) nach einem der vorstehenden Ansprüche, wobei die Windkraftanlage (10) ferner einen Rotor (50), der dazu wirkverbunden ist, die Antriebswelle (90) anzutreiben, und einen Generator (40), der dazu wirkverbunden ist, von der Antriebswelle (90) angetrieben zu werden, umfasst.

## Revendications

1. Agencement de palier (70) d'une éolienne (10) comprenant un boîtier de palier (80) et un arbre de transmission (90), l'arbre de transmission (90) étant disposé à l'intérieur du boîtier de palier (80) dans une direction axiale le long d'un axe longitudinal (A) du boîtier de palier (80), l'agencement de palier (70) comprenant en outre un palier en aval (100) et un palier en amont (200) en tant que paliers d'un fluide radial, le palier en aval (100) et le palier en amont (200) étant disposés entre le boîtier de palier (80) et l'arbre de transmission (90), l'agencement de palier (70) comprenant en outre un palier axial (300), le palier axial (300) comprend une butée de palier axial (302) pour limiter un mouvement de l'arbre de transmission (90) dans la direction axiale le long de l'axe longitudinal (A), la butée de palier axial (302) étant intégralement formée avec le boîtier de palier (80) sous la forme d'une saillie s'étendant depuis le boîtier de palier (80) dans une direction radiale du boîtier de palier (80), **caractérisé en ce que**
le palier axial (300) comprend une collerette axiale (301) disposée à l'opposé de la butée de palier axial (302) et s'étendant vers l'extérieur de l'arbre de transmission (90).

2. Agencement de palier (70) selon la revendication 1, **caractérisé en ce que** la butée de palier axial (301) est conçue de manière monolithique avec l'arbre de transmission (90).

3. Agencement de palier (70) selon la revendication 1 ou 2, **caractérisé en ce que** plusieurs patins de palier axial sont fixés, notamment de manière réversible, à la butée de palier axial (302).

4. Agencement de palier (70) selon la revendication 3, **caractérisé en ce que** les multiples patins de palier axial sont fixés à la butée de palier axial (302) au moyen de multiples ouvertures de fixation (305) disposées dans la butée de palier axial (302) .

5. Agencement de palier (70) selon l'une quelconque des revendications précédentes, **caractérisé en ce que** la butée de palier axial (302) est disposée sur toute une circonférence du boîtier de palier (80).

6. Agencement de palier (70) selon l'une quelconque des revendications précédentes, **caractérisé en ce que** la butée de palier axial (302) est disposée vers l'intérieur du boîtier de palier (80).

7. Agencement de palier (70) selon l'une quelconque des revendications précédentes, **caractérisé en ce que** le palier axial (300) est disposé au niveau d'une partie en aval ou d'une partie en amont de l'arbre de transmission (90).

8. Agencement de palier (70) selon l'une quelconque des revendications précédentes, **caractérisé en ce que** la butée de palier axial (302) est disposée à une extrémité en aval du boîtier de palier (80).

9. Agencement de palier (70) selon l'une quelconque des revendications précédentes, **caractérisé en ce que** le palier en aval (100) ou le palier en amont (200) de l'agencement de palier (70) est situé adjacent au palier axial (300).

10. Agencement de palier (70) selon la revendication 9, **caractérisé en ce que** le palier en aval (100) ou le palier en amont (200) et le palier axial (300) sont reliés fluidiquement l'un à l'autre.

11. Agencement de palier (70) selon l'une quelconque des revendications précédentes, **caractérisé en ce que** la collerette axiale (301) est disposée au niveau de l'arbre de transmission (90) .

12. Agencement de palier (70) selon l'une quelconque des revendications précédentes, **caractérisé en ce que** la collerette axiale (301) est disposée sur toute une circonférence de l'arbre de transmission (90).

13. Agencement de palier (70) selon l'une quelconque des revendications précédentes 10 à 11, **caractérisé en ce que** la collerette axiale (301) est intégralement formée avec l'arbre de transmission (90).

14. Éolienne (10) comprenant un agencement de palier (70) selon l'une quelconque des revendications précédentes, l'éolienne (10) comprenant en outre un rotor (50) relié de manière opérationnelle pour entraîner l'arbre de transmission (90) et un générateur (40) relié de manière opérationnelle pour être entraîné par l'arbre de transmission (90).
